# EUROPÄISCHE PATENTSCHRIFT

(11) **EP 1 108 922 B1**
(45) Veröffentlichungstag und Bekanntmachung des Hinweises auf die Patenterteilung: **21.06.2006**
(21) Anmeldenummer: 00124178.5
(22) Anmeldetag: 08.11.2000
(51) Int. Cl.: F16H 61/00, B60W 10/04, B60W 10/10

(54) **Verfahren und Vorrichtung zur Steuerung eines stufenlosen Automatikgetriebes**
Method of and apparatus for controlling a continuously variable automatic transmission
Méthode et appareil de commande d'un variateur continu de vitesse automatique

(30) Priorität: 18.12.1999 DE 19961312
(43) Veröffentlichungstag der Anmeldung: 20.06.2001
(73) Patentinhaber: Bayerische Motoren Werke Aktiengesellschaft, 80809 München (DE)
(72) Erfinder: Schleicher, Thomas, 80636 München (DE); Kress, Thomas, 85221 Dachau (DE); Wolf, Lothar, 81539 München (DE)

(56) Entgegenhaltungen:
- DE-A- 4 223 967
- US-A- 4 735 114
- US-A- 5 521 819

## Beschreibung

Die Erfindung betrifft ein Verfahren und eine Vorrichtung zur Steuerung eines stufenlosen Automatikgetriebes, bei dem über eine Getriebestellgröße das auf Antriebsräder eines Fahrzeugs wirkende Getriebeabtriebsmoment und das auf den Antriebsmotor zurückwirkende Motor-Reaktionsmoment einstellbar ist, wie bekannt aus der gattungsbildenden US 5 521 815.

Bei den stufenlos einstellbaren Übersetzungsgetrieben sind sog. CVT-Getriebe (Continous Variable Transmission) bekannt, bei denen über unterschiedlichste Variatoren (z.B. Riemen und Kegelräder) eine bestimmte und gewünschte Übersetzung eingestellt werden kann.

Darüber hinaus gibt es stufenlos verstellbare Übersetzungsgetriebe, bei denen man durch die Getriebestellgröße ein vom Getriebe zu übertragendes Abtriebsmoment einstellen kann. Das auf die Antriebsräder wirkende Getriebeabtriebsmoment bestimmt über die physikalischen Getriebegrößen das auf den Antriebsmotor zurückwirkende Motor-Reaktionsmoment. Die Übersetzung im Getriebe stellt sich in Abhängigkeit von der Momentenbilanz an der Motorschnittstelle ein. Solche vorgenannt erläuterten Getriebe sind bekannt und werden beispielsweise von der Firma Torotrak entwickelt. Bei der im folgenden beschriebenen Erfindung wird gerade ein solches stufenloses Übersetzungsgetriebe mit einstellbarem Übertragungsmoment verwendet.

Aufgabe der Erfindung ist es, ein Verfahren und eine Vorrichtung zur Steuerung eines stufenlosen Automatikgetriebes anzugeben, mit dem bzw. der ohne weiteres ein Übersetzungssteller- und Momentenstellerbetrieb durchführbar ist.

Diese Aufgabe wird durch die in den Ansprüchen 1, 9 und 11 angegebenen Merkmale gelöst.

Ein Kerngedanke der Erfindung ist es, die Getriebeverlustleistung, beispielsweise anhand eines physikalischen Modelles, zu berechnen und einer aus einer Bedarfsermittlung zur Verfügung gestellten Getriebeabtriebs-Sollleistung hinzuzufügen. Damit erhält man insgesamt einen Leistungsbedarf des Antriebsmotors, welcher sich eben gerade aus der Getriebeabtriebs-Sollleistung und der auf den Soll-Betriebspunkt bezogenen Getriebeverlustleistung zusammensetzt. Durch diese Berücksichtigung der Getriebeverlustleistung ist ein Anfahren in einem System mit Leistungsbetrachtung möglich.

Das Getriebeabtriebs-Sollmoment zur Bildung der Getriebeabtriebs-Sollleistung wird dabei insbesondere aus einer Radmomentenanforderung generiert. Der Leistungsbedarf des Antriebsmotors stellt die Basis sowohl für die Ermittlung des Motor-Sollmomentes als auch der Motor-Solldrehzahl dar. Beide Betriebspunkt-Größen des Motors können anhand vorgegebener Algorithmen berechnet oder anhand vorgegebener Werte ausgewählt werden (Betriebspunkt-Generierung).

Beim Momentenstellerbetrieb wird am Getriebe ein bestimmtes Getriebeabtriebsmoment eingestellt, welches vom Getriebe übertragen wird und ein Motor-Reaktionsmoment auf der anderen Seite des Getriebes hervorruft. Die Übersetzung im Getriebe stellt sich als Folge der Momentenbilanz an der Motorschnittstelle ein, also über die Erfüllung der Gleichgewichtbedingung zwischen dem vom Motor zur Verfügung gestelltem Motormoment und dem Motor-Reaktionsmoment.

Beim Übersetzungsstellerbetrieb dagegen besteht die Wirkung der Getriebesteuerung in der Realisierung einer bestimmten vorgegebenen Übersetzung. Das Antriebsmoment ist dann in erster Näherung eine Folge des abgegebenen Motormoments, und zwar in Abhängigkeit von der Übersetzung des Getriebes und dessen Verlusten.

Das vorliegend beschriebene Verfahren und die vorliegend beschriebene Vorrichtung ermöglichen - bei einem Getriebe mit einzustellendem Abtriebsmoment - einen Getriebebetrieb im Momentenstellermodus, im Übersetzungsstellermodus oder in einem Mischbetrieb.

Beim Momentenstellerbetrieb wird die Drehzahl des Motors auf eine bestimmte Solldrehzahl eingeregelt, die ein Ergebnis der Betriebspunkt- Generierung darstellt. Gemäß einer ersten Regelungsalternative wird dabei zur Erreichung der Solldrehzahl das Motor-Sollmoment in Abhängigkeit von der Differenz der Motor-Istdrehzahl von der Motor-Solldrehzahl korrigiert. Gemäß einer überlagerten, zweiten Regelungsalternative wird die Getriebestellgröße derart geändert, daß sich ein korrigiertes Getriebeabtriebs-Sollmoment ergibt. Vorzugsweise erhält die erste Regelungsalternative eine bevorzugte Priorisierung, da dabei keine Momentenänderung am Getriebeausgang in Kauf genommen werden muß. Es wird lediglich die Motoranforderung variiert, um über Motormomentenüberschuß bzw. -unterdeckung die erforderliche Solldrehzahl zu erreichen.

Für den Fall, daß das zur Verfügung stehende Motorpotential nicht ausreicht, ist es unumgänglich, das Getriebeabtriebs-Sollmoment und somit das Motor-Reaktionsmoment zu reduzieren, was jedoch zu einem Momenteneinbruch am Getriebeausgang führt.

Um diese Priorität im Momentenstellerbetrieb bezüglich einer Änderung des Motor-Sollmomentes oder des Getriebeabtriebs-Sollmomentes gewährleisten zu können, wird vorzugsweise überprüft, ob das Motor-Sollmoment vom Antriebsmotor auch realisiert werden kann. Dies ist in einer Modellrechnung möglich.

Beim Übersetzungsstellerbetrieb hingegen wird die Getriebestellgröße derart eingestellt, daß eine ermittelte Getriebe-Istübersetzung mit einer berechneten Getriebe-Sollübersetzung übereinstimmt. Die Getriebe-Istübersetzung wird dabei vorzugsweise aus der Motor-Istdrehzahl und der Getriebeabtriebs-lstdrehzahl ermittelt. Die Getriebe-Sollübersetzung wird aus der Motor-Solldrehzahl und der Getriebeabtriebs-Istdrehzahl oder anhand eines vorgegebenen Algorithmus oder anhand vorgegebener Werte ermittelt.

Im Übersetzungsstellerbetrieb kann die Getriebe-Istübersetzung durch Verändern der Getriebestellgröße auch gezielt auf einen von der Getriebe-Sollübersetzung verschiedenen Wert eingeregelt werden. Dies ist kurzfristig notwendig, um besonderen Systemzuständen Rechnung zu tragen oder besondere Anforderungen zu realisieren.

Nachfolgend wird die vorliegende Erfindung anhand eines Ausführungsbeispiels und mit Bezug auf die beiliegenden Zeichnungen näher erläutert. Die Zeichnungen zeigen in
- Fig. 1: ein Prinzipschaltbild von miteinander verbunden Hardware-Komponenten bei einer ersten Ausführungsform der vorliegenden Erfindung,
- Fig. 2: ein Blockschaltbild, welches die Ermittlung der Motorbedarfsleistung zeigt,
- Fig. 3: eine Prinzipdarstellung, welche die Erzeugung von Betriebspunkten zeigt,
- Fig. 4: ein Prinzipdiagramm, welches die Regelung im Momentenstellerbetrieb zeigt,
- Fig. 5: ein Prinzipdiagramm, welches die Regelung im Obersetzungsstellerbetrieb zeigt und

- Fig. 6: ein Diagramm, welches einen Gesamtablauf des anhand der Fig. 1 bis 5 erläuterten Verfahrens darstellt.

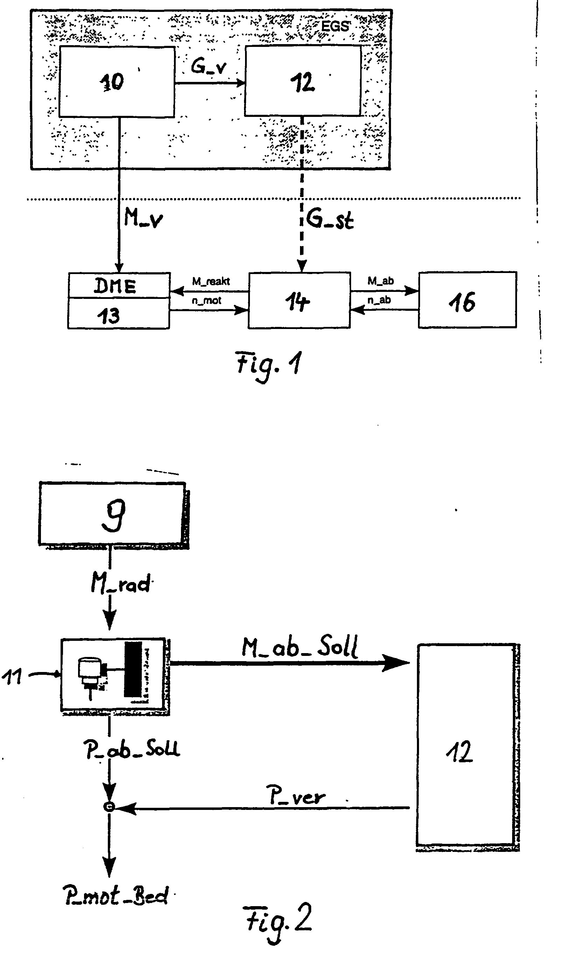

In Fig. 1 ist eine Prinzipdarstellung einer aus Motor 13, Getriebe 14 und Fahrzeug 16 bestehenden Regelstrecke eines Antriebsstranges bei einem Kraftfahrzeug dargestellt. Dabei wird der Motor 13 von einer digitalen Motorsteuerung DME beaufschlagt und gesteuert. Der Motor 13 gibt eine bestimmte Motorleistung (Motor-Istleistung) an das Getriebe ab, indem eine Motordrehzahl an das Getriebe 14 geliefert wird und ein Motor-Reaktionsmoment (entspricht Motor-Istmoment) aus dem Getriebe 14 abgestützt wird, in dem wiederum über eine Getriebestellgröße das Motor-Reaktionsmoment entsteht und ein bestimmtes Getriebeabtriebsmoment realisiert wird. Das Getriebeabtriebsmoment M_ab wirkt über Wellen und Hinterachsgetriebe auf die angetriebenen Räder eines Fahrzeugs 16. Das Verhalten der Getriebe-Abtriebsdrehzahl bestimmt sich aus der Bilanz der Radmomente und wird dem Getriebe aufgeprägt.

Das Getriebe 14 ist im vorliegenden Fall ein auf dem Wirkprinzip des Momentenstellers beruhendes Getriebe, bei dem durch eine Getriebestellgröße G_st das Getriebeabtriebsmoment M_ab eingestellt wird und gleichzeitig ein auf den Motor 13 zurückwirkendes Motor-Reaktionsmoment M_reakt entsteht. Die sich in dem Getriebe 14 einstellende Übersetzung ist bei dem vorliegenden Getriebetypus eine Folge der Momentenbilanz an der Motorschnittstelle, wo sich ein Gleichgewicht zwischen dem Motorreaktionsmoment M_reakt und dem vom Motor zur Verfügung gestellten Moment (Motor-Istmoment), bestehend aus Verbrennungs- u. Rotationsmoment, einstellt.

Die digitale Motorelektronik DME erhält ihre Vorgaben von der elektronischen Getriebesteuerung EGS, die vorliegend zwei Module aufweist. Ein Modul 10 wird als fahrzeugnahes Modul bezeichnet. Ein zweites Modul 12 wird als getriebenahes Modul bezeichnet. Die Funktionen beider Module werden nachfolgend noch deutlich.

Zunächst sei angemerkt, daß das fahrzeugnahe Modul 10 der digitalen Motorsteuerung DME eine Motorvorgabe M_v in Form einer Momentenanforderung übermittelt, aufgrund welcher die digitale Motorsteuerung DME die Stellgrößen des Motors 13 (z.B. Zündung, Befüllung) bestimmt.

Überdies gibt das fahrzeugnahe Modul 10 ein Signal G_v an das getriebenahe Modul 12 ab, welches in Abhängigkeit von diesem Signal G_v die Getriebestellgröße G_st generiert und an das Getriebe 14 abgibt.

Das fahrzeugnahe Modul 10 generiert aus Fahrer-, Fahrzeug- und Umweltgrößen sowie Systemgrößen des Antriebsstranges, d. h. Motor-, Getriebe- und Antriebsstrangdaten, die Vorgabe M_v an die digitale Motorsteuerung DME und kann als Mastermodul bezeichnet werden.

Das getriebenahe Modul 12 ermittelt aus der Vorgabe G_v des fahrzeugnahen Moduls 10 und den Systemgrößen des Getriebes die erforderliche Stellgrößen G_st und kann insofern als Slave-Modul bezeichnet werden.

In Fig. 2 wird nun eine erste Stufe des vorliegend beschriebenen Ausführungsbeispieles eines erfindungsgemäßen Verfahrens bzw. einer erfindungsgemäßen Vorrichtung gezeigt.

In einem Eingangsmodul 9 wird aus Fahrer-, Fahrzeug- oder Umweltdaten (z. B. Fahrpedalstellung, Fahrzeuggeschwindigkeit v, Informationen von externen Fahrzeugregelsystemen etc.) eine Radmomentenanforderung M_rad ermittelt. Diese Größe M_rad stellt das an den Antriebsrädern gewünschte Moment dar. Die Radmomentenanforderung M_rad wird an ein Modul 11 weitergegeben, in welchem über ein inverses physikalisches Modell des Abtriebsstrangs, bestehend aus physikalischer Beschreibung von Antriebswellen, Hinterachsgetriebe und Gelenkwelle, aus der Radmomentenanforderung M_rad ein Getriebeabtriebs-Sollmoment M_ab_Soll errechnet wird. Dabei werden Verluste, Steifigkeiten oder andere bekannte Einflüsse im Abtriebsstrang mit berücksichtigt.

Dem Getriebeabtriebs-Sollmoment M_ab_Soll können natürlich andere Vorgaben überlagert werden, die insbesondere aus reaktiven Funktionen bzw. aus Funktionen mit hohen Dynamikanforderungen, wie die Sicherheitsfunktionen, resultieren und zu einer gezielten Abweichung des vorgegebenen Radmomentes M_rad führen. Auf eine solche Überlagerung wird im Rahmen einer Regelungsalternative beim Momentenstellerbetrieb später noch eingegangen.

Bei einem Betrieb der beschriebenen Vorrichtung nach dem Wirkprinzip "Momentensteller" wird das Getriebeabtriebs-Sollmoment M_ab_Soll direkt an das getriebenahe Modul 12 kommuniziert. In dem getriebenahen Modul 12 wird die im Getriebe auftretende Verlustleistung P_ver bestimmt und mit einer Abtriebs-Sollleistung des Getriebes P_ab_Soll, die ebenfalls aus dem Modul 11 stammt, zusammenaddiert. Diese Abtriebs-Sollleistung P_ab_Soll ergibt sich aus dem geforderten Getriebeabtriebs-Sollmoment M_ab_Soll (in Fig. 1 auch M_ab) und der realen Getriebeabtriebsdrehzahl n_ab. Die Getriebeverlustleistung P_v wird über ein physikalisches Modell ermittelt. Dabei stellt das Getriebeabtriebs-Sollmoment M_ab_Soll eine von mehreren Modelleingangsgrößen für das Getriebe-Verlustleistungsmodells dar, welches im getriebenahen Modul 12 enthalten ist. Die Funktionalität, d. h. die hinterlegte Physik des Verlustleistungsmodells ist natürlich abhängig von der konkreten Getriebekonstruktion, d.h. von dem angewandten Wirkprinzip, dem eingesetzten Variator bzw. Anfahrelement.

Besonders wesentlich ist die Berücksichtigung der im Getriebe auftretenden Verlustleistung, bezogen auf den Soll-Betriebspunkt, zur Realisierung des Anfahrvorganges bei zugrundeliegender Leistungsbetrachtung. Die Summe aus der Getriebeverlustleistung P_ver und der Getriebeabtriebs-Soll-Leistung P_ab_Soll ergibt insgesamt den vom Antriebsmotor zu fordernden Leistungsbedarf. Diese Leistung ist zur Realisierung der o. g. Vorgaben notwendig.

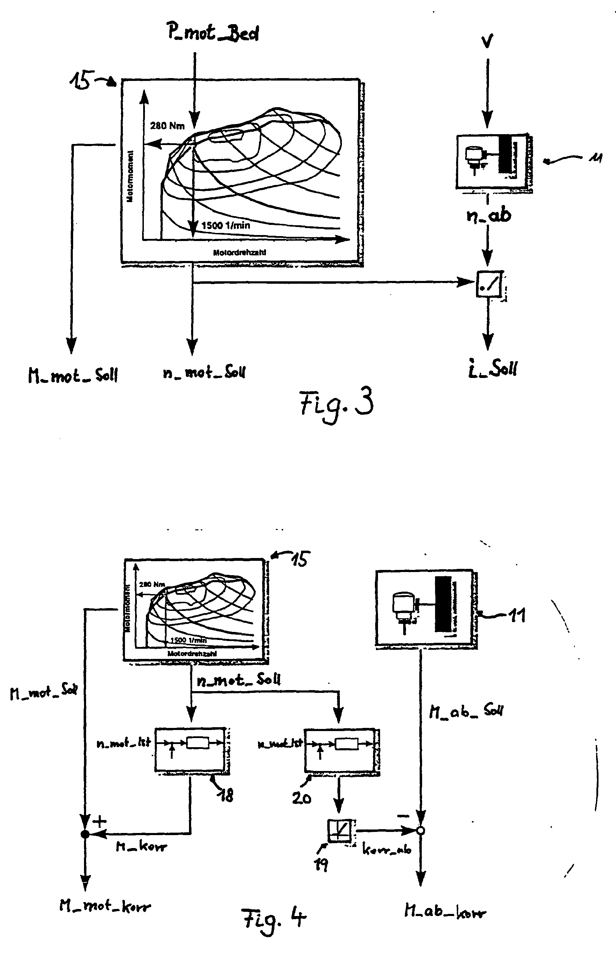

Aus dem Leistungsbedarf des Antriebsmotors lassen sich nun die verschiedenen Betriebspunkte ermitteln. Dies wird mit Bezug auf Fig. 3 näher erläutert. Darin ist eine Einheit 15 dargestellt, in welcher Motormomentenverläufe in Abhängigkeit von der Motordrehzahl aufgetragen sind. Je nach Fahrsituation und Fahrerwunsch kann eine Kennlinie aus dem in der Einheit 15 enthaltenen Kennliniensatz ausgewählt werden. Über den Schnittpunkt der wirksamen Momentenkennlinie mit der Leistungsbedarfs-Hyperbel ergibt sich ein zugehöriges Motordrehzahl-Motormomenten-Paar.

Für jeden Betriebspunkt kann aus der Einheit 15 damit das Motor-Sollmoment M_mot_Soll und die Motorsolldrehzahl n_mot_Soll bestimmt werden. Überdies läßt sich über die Fahrzeuggeschwindigkeit v in dem Modul 11 die Getriebeabtriebsdrehzahl n_ab ermitteln bzw. direkt meßtechnisch erfassen, die zusammen mit der Motordrehzahl n_mot_Soll zu einer für den später dargestellten Übersetzungsstellerbetrieb wichtigen Sollübersetzung i_Soll führt. Diese kann alternativ anhand eines vorgegebenen Algorithmus oder anhand vorgegebener Werte ermittelt werden.

Damit liegen entsprechend einer Fahrwunschanforderung (Radmomentenanforderung) das zu realisierende Getriebeabtriebs-Sollmoment, das Motorsollmoment M_mot_Soll, die Motor-Solldrehzahl n_mot_Soll und die Sollübersetzung i_Soll vor, also die Motor- und Getriebebetriebspunkte. Relevante Kriterien bei der Bildung der Betriebspunkte sind bezüglich der Radmomentenanforderung Umwelt- und Fahrsituation sowie Fahrbarkeit, motorseitig Motor-Gesamtwirkungsgrad, Akustik und Fahrcharakteristik.

Bei der Verwirklichung des Momentenstellerbetriebs erfolgt die Vorgabe des Getriebe-Betriebspunktes über das beschriebene resultierende Getriebeabtriebs-Sollmoment M_ab_Soll.

Dagegen erfolgt die Vorgabe des Getriebebetriebspunktes beim Übersetzungsstellerbetrieb über die Soll-Übersetzung i_Soll, die als eine Ausführungsform aus der aktuellen Getriebe-Abtriebs-drehzahl n_ab und aus der Motor-Solldrehzahl n_mot_Soll, als Ergebnis der Motorbetriebspunkt-Betrachtung, gebildet werden kann. Weitere Ausführungen bestehen in der Ermittlung anhand eines vorgegebenen Algorithmus oder anhand vorgegebener Werte.

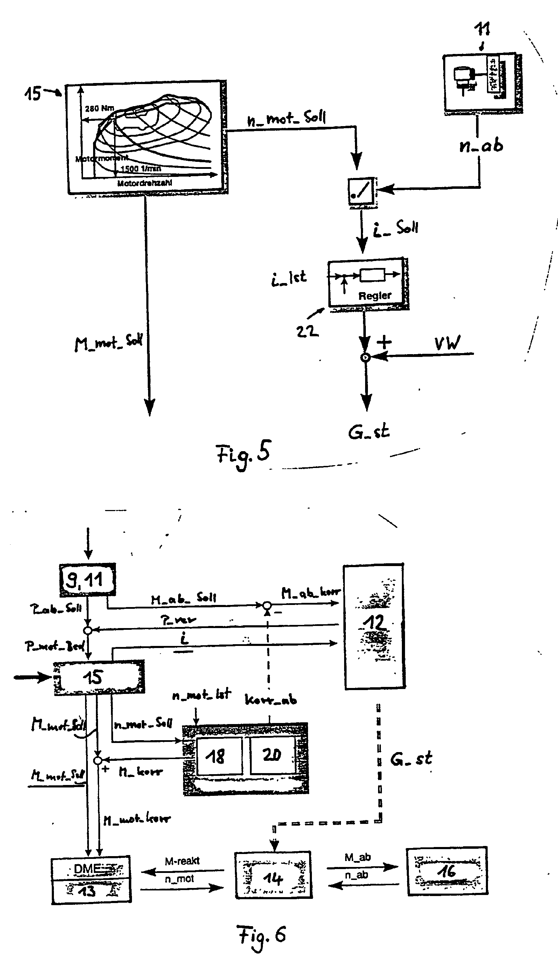

Der Momentenstellerbetrieb wird nachfolgend anhand der Fig. 4 näher erläutert. Das aus der Einheit 15 vorliegende Motor-Sollmoment M_mot_Soll stellt den Basiswert für die an die digitale Motorsteuerung DME weiterzuleitende Momentenanforderung dar. Zudem wird die Motorsolldrehzahl n_mot_soll an einen Regler 18 ausgegeben, dem über einen zusätzlichen Eingang die Motor-Istdrehzahl n_mot_lst zugeführt wird. Aus der Abweichung der beiden Motordrehzahlen, nämlich der SollDrehzahl und der Ist-Drehzahl wird ein Korrekturwert M_korr_mot errechnet, der ein Moment darstellt, welches das erforderliche Potential besitzt, um die Motor-Istdrehzahl n mot_Ist auf die Motorsolldrehzahl n_mot_Soll zu bringen. Das Moment M_korr wird mit dem Motorsollmoment M_mot_Soll addiert, was zu einem korrigierten Motormoment M_mot_korr führt. Mit diesem korrigierten Motormoment M_mot_korr wird die digitale Motorsteuerung DME beaufschlagt, welche daraufhin den Motorbetrieb so steuert, daß gerade das korrigierte Motormoment M_mot_korr erzeugt wird. Dadurch kann die Motor-Istdrehzahl auf die gewünschte Motor-Solldrehzahl eingeregelt werden.

Allerdings kann bei der gerade genannten Regelung das Problem auftreten, daß die physikalischen Grenzen des Motors erreicht sind und insbesondere bei einem Betriebspunkt auf einer Volllastkurve keine positive Steigerung des Motormomentes mehr möglich ist. D.h. in diesem Fall hat der Motor kein Potential mehr, um ein gefordertes Motormoment zur Verfügung zu stellen. In diesem Fall wird die in Fig. 4 rechts dargestellte zweite Regelungsalternative eingesetzt. Dazu wird die Motorsolldrehzahl n_mot_Soll einem zweiten Regler 20 zugeführt, dem ebenfalls die Motor-Istdrehzahl n_mot_Ist bereitgestellt wird. Durch Vergleich beider Drehzahlwerte wird eine Größe ermittelt, die in der Einrichtung 19 in ein ausschließlich positives Korrektursabtriebsmoment M_korr_ab umgewandelt wird. Dieses Korrekturabtriebsmoment M_korr_ab wird von dem Getriebeabtriebs-Sollmoment M_ab_Soll abgezogen, was zu einem korrigierten Getriebeabtriebsmoment M_ab_korr führt, das nunmehr über das getriebenahe Modul 12 vom Getriebe 14 realisiert wird.

Mit dieser Vorgehensweise wird die Reduzierung des vorgegebenen Getriebe-Sollabtriebsmoments M_ab_Soll und damit des Motor-Reaktionsmomentes M_reakt erreicht, so daß dem Motor wieder genug Potential zur Verfügung steht, um nunmehr die Motor-Solldrehzahl M_mot_Soll zu realisieren. Als Folge davon tritt jedoch ein Getriebeabtriebs-Sollmoment mit negativer Abweichung auf. Die Regeleinrichtung wirkt ausschließlich so, daß das Getriebeabtriebs-Sollmoment M_ab_Soll reduziert wird. Eine eigenständige Erhöhung des Abtriebsmomentes in Abweichung von der Fahrervorgabe wird aus Sicherheitsgründen ausgeschlossen.

Da bei der ersten Regelalternative das Getriebeabtriebs-Sollmoment gemäß Vorgabe realisiert wird, ist ihr der Vorzug zu geben. Nur wenn eine vorzugsweise kontinuierlich durchgeführte Überprüfung der Motorverhältnisse eine Momentenreserve ausweist, die zum Halten des aktuellen Betriebspunktes unzureichend ist, bzw. ein neuer Betriebspunkt mit erhöhtem Leistungsbedarf nicht angefahren werden kann, wird auf die überlagerte, zweite Regelungsalternative zurückgegriffen, die Momentenüberschuß über Reduzierung des Motor-Reaktionsmomentes einstellt.

Der Übersetzungsstellerbetrieb wird mit Bezug auf Fig. 5 erläutert. Dabei wird von der Einheit 15 wie beim Momentenstellerbetrieb das Motorsollmoment M_mot_Soll ausgegeben. Im Gegensatz zum Momentenstellerbetrieb wird dieses Motormoment jedoch nicht verändert sondern unverändert an die digitale Motorsteuerung DME weitergegeben. Aus der Motorsolldrehzahl n_mot_Soll und der aus Modul 11 bekannten Getriebeabtriebsdrehzahl n_ab bzw. anhand eines vorgegebenen Algorithmus oder anhand vorgegebener Werte wird in einer Einrichtung 21 die Sollübersetzung i_Soll bestimmt. Die Sollübersetzung i_soll wird einem Regler 22 zur Verfügung gestellt, dem auch die Getriebe-Istübersetzung i_Ist zugeführt wird. Der Regler berechnet aus der Abweichung eine Korrekturgröße, die er mit dem Vorsteuerwert VW addiert, wobei die Summe aus beiden Größen eine auf die Getriebesteuergröße G_st einwirkende Größe ergibt.

Das in der Betriebspunktermittlung generierte Motor-Sollmoment M_mot_Soll führt, innerhalb der physikalischen Grenzen des Motors, über die Wirkungskette digitale Motorsteuerung DME und physikalischer Motor 13 zu einem entsprechenden Effektivmoment am Eingang des Getriebes 14. Die gemäß Fig. 5 beschriebene Regeleinrichtung wirkt über die Stellgrößen aus dem getriebenahen Modul 12 auf das Getriebe 14 in der Form, daß Abweichungen zwischen Getriebe-Sollübersetzung i_Soll und Getriebe-Istübersetzung i_Ist ausgeregelt werden. Das GetriebeAbtriebsmoment M_ab ergibt sich somit wie bei konventionellen CVT-Getrieben bzw. festverzahnten Getrieben aus effektivem Motormoment, Getriebeübersetzung und Getriebeverlusten.

Die beiden oben beschriebenen Betriebsarten, nämlich der Momentenstellerbetrieb einerseits und der Übersetzungsstellerbetrieb andererseits können in einer Mischform verwendet werden. Insbesondere kann eine Überlagerung von Reglersystemen unter Berücksichtigung von Stabilitätskriterien und Betriebssituationen existieren. Eine solche Mischform ist in Fig. 6 dargestellt. Dabei bezeichnen gleiche Bezugszeichen und -größen gleiche Elemente. Die den Übersetzungsstellerbetrieb kennzeichnenden Größen sind unterstrichen (i und M mot Soll). Alle anderen Steuer- und Regelgrößen gehören, soweit sie nicht im Übersetzungsstellerbetrieb verwendet sind, zur Momentenstellerregelung.

Insgesamt ist mit der vorliegenden Erfindung eine Einrichtung zur Steuerung bzw. Regelung von stufenlosen Automatikgetrieben mit der Eigenschaft geschaffen, daß diese die Wirkprinzipien "Übersetzungssteller" und "Momentensteller" gleicherma-ßen abdecken. Das Grundprinzip besteht dabei darin, daß von der Einrichtung im Zusammenwirken mit der Motorsteuerung und dem physikalischen Antriebsstrang im Rahmen der physikalischen Möglichkeiten ein vorgegebener Antriebsmomentenwunsch realisiert wird.

## Patentansprüche

1. Verfahren zur Steuerung einer Antriebsmotor/Getriebeeinheit mit einem stufenlosen Automatikgetriebe, bei dem über eine Getriebestellgröße das auf Antriebsräder eines Fahrzeugs wirkende Getriebeabtriebsmoment und das auf den Antriebsmotor zurückwirkende Motor-Reaktionsmoment einstellbar ist, **gekennzeichnet durch** die Schritte :
Vorgabe eines Getriebeabtriebs-Sollmomentes und Bestimmung der Getriebestellgröße,
Ermittlung der Getriebeabtriebs-Sollleistung aus dem Getriebeabtriebs-Sollmoment,
Berechnung der Getriebeverlustleistung,
Ermittlung des Leistungsbedarfs des Antriebsmotors aus der Getriebeabtriebs-Sollleistung und der Getriebeverlustleistung,
Ermittlung eines Soll-Motormomentes und einer Soll-Motordrehzahl aus dem Leistungsbedarf des Antriebsmotors,
Ermittlung eines korrigierten Motor-Sollmomentes bei vorgegebener Getriebestellgröße und/oder eines korrigierten Getriebeabtriebs-Sollmomentes verbunden mit einer Änderung der Getriebestellgröße (Momentenstellerbetrieb) zur Einregelung der Motordrehzahl und/oder
Ermittlung einer Getriebe-Sollübersetzung und eines Soll-Motormomentes bei Änderung der Getriebestellgröße derart, daß eine ermittelte Getriebe-Istübersetzung mit der berechneten Getriebe-Sollübersetzung (Übersetzungsstellerbetrieb) übereinstimmt.

2. Verfahren nach Anspruch 1,
**dadurch gekennzeichnet,**
**daß** beim Momentenstellerbetrieb das Motor-Sollmoment in Abhängigkeit von der Differenz zwischen der Motor-Istdrehzahl und der Motor-Solldrehzahl korrigiert wird.

3. Verfahren nach Anspruch 2,
**dadurch gekennzeichnet,**
**daß** überprüft wird, ob das Motor-Sollmoment vom Antriebsmotor realisierbar ist, und daß das Getriebeabtriebs-Sollmoment verringert wird, falls das Motor-Sollmoment nicht realisierbar ist.

4. Verfahren nach Anspruch 3,
**dadurch gekennzeichnet,**
**daß** die Verringerung des Getriebeabtriebs-Sollmomentes in Abhängigkeit von der Differenz Motor-Istdrehzahl und Motor-Solldrehzahl erfolgt.

5. Verfahren nach einem der Ansprüche 1 bis 4,
**dadurch gekennzeichnet,**
**daß** im Übersetzungsstellerbetrieb
die Getriebe-Istübersetzung aus der Motor-Istdrehzahl und der Getriebeabtriebs-Istdrehzahl ermittelt wird,
die Getriebe-Sollübersetzung aus der Motor-Solldrehzahl und Getriebeabtriebs-Istdrehzahl oder anhand eines vorgegebenen Algorithmus oder anhand vorgegebener Werte ermittelt wird.

6. Verfahren nach einem der Ansprüche 1 bis 5 ,
**dadurch gekennzeichnet,**
**daß** für besondere Systemzustände die Getriebe-Istübersetzung durch Verändern der Getriebestellgröße gezielt auf einen von der Getriebe-Sollübersetzung verschiedenen Wert eingeregelt wird.

7. Verfahren nach einem der vorhergehenden Ansprüche,
**dadurch gekennzeichnet,**
**daß** das Getriebeabtriebs-Sollmoment aus einer Radmomentenanforderung generiert wird.

8. Verfahren nach einem der vorhergehenden Ansprüche,
**dadurch gekennzeichnet,**
**daß** das Soll-Motormoment und die Soll-Motordrehzahl in Abhängigkeit vom Motorleistungsbedarf anhand eines vorgegebenen Algorithmus berechnet oder anhand vorgegebener Werte ausgewählt werden.

9. Vorrichtung zur Steuerung einer Antriebsmotor/Getriebeeinheit umfassend
- einen Antriebsmotor und
- eine damit verbundene Motorsteuerung,
- ein stufenloses Automatikgetriebe, bei dem über eine Getriebestellgröße das auf Antriebsräder eines Fahrzeugs wirkende Getriebeabtriebsmoment und auf einen Antriebsmotor zurückwirkende Motor-Reaktionsmoment einstellbar ist und **gekennzeichnet durch**
- eine damit verbundene Getriebesteuerung,
-- mit einem ersten Modul zur Ermittlung einer Getriebeabtriebs-Sollleistung und eines Getriebeabtriebs-Sollmoments,
-- mit einem mit dem ersten Modul und dem stufenlosen Getriebe verbundenen zweiten Modul zur Ermittlung einer Getriebeverlustleistung und der Getriebestellgröße,
-- mit einem mit dem ersten und dem zweiten Modul sowie der Motorsteuerung verbundenen dritten Modul zur Ermittlung eines Soll-Motormomentes und einer Soll-Motordrehzahl aus der aus Soll-Abtriebsleistung und Verlustleistung zusammengesetzten Soll-Motorleistung,
-- mit einem mit dem dritten Modul verbundenen Betriebspunkt-Regler zum Korrigieren des von dem dritten Modul an die Motorsteuerung abgegebenen Motor-Sollmoment und/oder des vom ersten Modul an das zweite Modul abgegebenen Getriebeabtriebs-Sollmoments verändern kann.

10. Vorrichtung nach Anspruch 9,
**dadurch gekennzeichnet,**
**daß** der Betriebspunkt-Regler einen Eingang aufweist, über den ihm die Motor-Istdrehzahl zur Verfügung gestellt wird.

11. Vorrichtung zur Steuerung einer Antriebsmotor/Getriebeeinheit umfassend
- einen Antriebsmotor und
- eine damit verbundene Motorsteuerung,
- ein stufenloses Automatikgetriebe, bei dem über eine Getriebestellgröße das auf Antriebsräder eines Fahrzeugs wirkende Getriebeabtriebsmoment und auf einen Antriebsmotor zurückwirkende Motor-Reaktionsmoment einstellbar ist, und **gekennzeichnet durch**
- eine damit verbundene Getriebesteuerung,
-- mit einem ersten Modul zur Ermittlung einer Getriebeabtriebs-Sollleistung,
-- mit einem mit dem stufenlosen Getriebe verbundenen zweiten Modul zur Ermittlung einer Getriebeverlustleistung und der Getriebestellgröße,
-- mit einem mit dem ersten und dem zweiten Modul sowie der Motorsteuerung verbundenen dritten Modul zur Ermittlung eines Soll-Motormomentes aus der aus Soll-Abtriebsleistung und Verlustleistung zusammengesetzten Soll-Motorleistung, wobei das dritte Modul an das zweite Modul eine Information über die Getriebe-Sollübersetzung abgibt, so daß am zweiten Modul aufgrund der Getriebe-Istübersetzung die Getriebestellgröße bestimmbar ist.

## Claims

1. A method for controlling a driving engine/transmission unit with a continuously variable automatic transmission, in which the transmission output torque acting upon the driving wheels of a vehicle and the engine reaction torque retroacting upon the driving engine can be adjusted via a regulated transmission variable, **characterised by** the steps:
Inputting of a desired transmission output torque and determination of the regulated transmission variable,
determination of the desired transmission output power from the desired transmission output torque,
calculation of the transmission power loss,
determination of the power requirement of the driving engine from the desired transmission output power and the transmission power loss,
determination of a desired engine torque and a desired rotational engine speed from the power requirement of the driving engine,
determination of a corrected desired engine torque with a predefined regulated transmission variable and/or a corrected desired transmission output torque connected with a change in the regulated transmission variable (torque regulator operation) for controlling the rotational engine speed and/or
determination of a desired transmission ratio and a desired engine torque on change of the regulated transmission variable in such a way that an actual transmission ratio determined agrees with the desired transmission ratio calculated (transmission regulator operation).

2. A method according to claim 1, **characterised in that** during the torque regulator operation, the desired engine torque is corrected as a function of the difference between the actual rotational engine speed and the desired rotational engine speed.

3. A method according to claim 2, **characterised in that** a check is made as to whether the desired engine torque can be implemented by the driving engine, and **in that** the desired transmission output torque is reduced if the desired engine torque is not implementable.

4. A method according to claim 3, **characterised in that** the reduction in the desired transmission output torque takes place as a function of the difference between the actual rotational engine speed and the desired rotational engine speed.

5. A method according to any one of claims 1 to 4, **characterised in that**, in the transmission ratio regulator operation, the actual transmission ratio is determined from the actual rotational engine speed and the actual rotational transmission output speed, and the desired transmission ratio is determined from the desired rotational engine speed and the actual rotational transmission output speed or with the aid of a predefined algorithm or with the aid of predefined values.

6. A method according to any one of claims 1 to 5, **characterised in that**, for special system states, the actual transmission ratio is adjusted in a targeted manner to a value which differs from the desired transmission ratio by changing the regulated transmission variable.

7. A method according to any one of the preceding claims, **characterised in that** the desired transmission output torque is generated from a wheel torque requirement.

8. A method according to any one of the preceding claims, **characterised in that** the desired engine torque and the desired rotational engine speed are calculated as a function of the engine power requirement with the aid of a predefined algorithm or with the aid of predefined values.

9. A device for controlling a driving engine/transmission unit comprising
- a driving engine and
- an engine control connected therewith,
- a continuously variable automatic transmission, in which the transmission output torque acting upon driving wheels of a vehicle and the engine reaction torque retroacting upon a driving engine can be adjusted via a regulated transmission variable, and **characterised by**
- a transmission control connected therewith
- with a first module for determining a desired transmission output power and a desired transmission output torque,
- with a second module connected to the first module and the continuously variable transmission for determining a transmission power loss and the regulated transmission variable,
- with a third module connected to the first and the second module and the engine control, for determining a desired engine torque and a desired rotational engine speed from the desired engine power composed of the desired output power and the power loss
- with an operating point regulator connected to the third module, for correcting the desired engine torque transmitted by the third module to the engine control and/or the desired transmission output torque transmitted by the first module to the second module.

10. A device according to claim 9, **characterised in that** the operating point regulator has an input, via which the actual rotational engine speed is provided to it.

11. A device for controlling a driving engine/transmission unit comprising
- a driving engine and
- an engine control connected therewith,
- a continuously variable automatic transmission, in which the transmission output torque acting upon driving wheels of a vehicle and the engine reaction torque retroacting upon a driving engine can be adjusted via a regulated transmission variable, and **characterised by**
- a transmission control connected therewith,
- with a first module for determining a desired transmission output power,
- with a second module connected to the continuously variable transmission for determining a transmission power loss and the regulated transmission variable,
- with a third module connected to the first and the second module and the engine control, for determining a desired engine torque from the desired engine power composed of the desired output power and the power loss, wherein the third module transmits information about the desired transmission ratio to the second module, so the regulated transmission variable can be determined at the second module on the basis of the actual transmission ratio.

## Revendications

1. Procédé de commande d'une unité moteur d'entraînement/ transmission comprenant une transmission automatique réglable en continu, qui permet de régler, par une grandeur de réglage de transmission, le couple de sortie de transmission agissant sur des roues motrices d'un véhicule et le couple de réaction sur moteur agissant en retour sur le moteur d'entraînement,
**caractérisé par**
les étapes suivantes :
- prédéfinition d'un couple de consigne de sortie de transmission et détermination de la grandeur de réglage de transmission,
- détermination de la puissance de consigne de sortie de transmission à partir du couple de consigne de sortie de transmission,
- calcul de la puissance dissipée de transmission,
- détermination du besoin de puissance du moteur d'entraînement à partir de la puissance de consigne de sortie de transmission et de la puissance dissipée de transmission,
- détermination d'un couple de moteur de consigne et d'un régime de moteur de consigne à partir du besoin de puissance du moteur d'entraînement,
- détermination d'un couple de consigne de moteur corrigé en présence d'une grandeur de réglage de transmission prédéfinie et/ou d'un couple de consigne de sortie de transmission, conjointement avec une modification de la grandeur de réglage de transmission (fonctionnement à régulateur de couple) pour ajuster le régime de moteur et/ ou
- détermination d'un rapport de transmission de consigne et d'un couple de moteur de consigne en modifiant la grandeur de réglage de transmission de sorte qu'un rapport de transmission réel concorde avec le rapport de transmission de consigne (fonctionnement à régulateur de rapport de transmission).

2. Procédé selon la revendication 1,
**caractérisé en ce qu'**
en fonctionnement à régulateur de couple, le couple de consigne de moteur est corrigé en fonction de la différence entre le régime réel de moteur et le régime de consigne de moteur.

3. Procédé selon la revendication 2,
**caractérisé en ce qu'**
on vérifie si le couple de consigne de moteur est réalisable par le moteur d'entraînement, et on réduit le couple de consigne de sortie de transmission si le couple de consigne de moteur n'est pas réalisable.

4. Procédé selon la revendication 3,
**caractérisé en ce que**
la réduction de couple de consigne de sortie de transmission s'effectue en fonction de la différence entre le régime réel de moteur et le régime de consigne de moteur.

5. Procédé selon l'une quelconque des revendications 1 à 4,
**caractérisé en ce qu'**
en fonctionnement à régulateur de rapport de transmission :
- le rapport de transmission réel est déterminé à partir du régime réel de moteur et du régime réel de sortie de transmission, et
- le rapport de transmission de consigne est déterminé à partir du régime de consigne de moteur et du régime réel de sortie de transmission ou à l'aide d'un algorithme prédéfini ou de valeurs prédéfinies.

6. Procédé selon l'une quelconque des revendications 1 à 5,
**caractérisé en ce que**
pour des états de système particuliers, le rapport de transmission réel est réglé de manière ciblée sur une valeur différente du rapport de transmission de consigne par modification de la grandeur de réglage de transmission.

7. Procédé selon l'une quelconque des revendications précédentes,
**caractérisé en ce que**
le couple de consigne de sortie de transmission est généré à partir d'une demande de couple de roue.

8. Procédé selon l'une quelconque des revendications précédentes,
**caractérisé en ce que**
le couple de moteur de consigne et le régime de moteur de consigne sont calculés à l'aide d'un algorithme prédéfini ou choisis à l'aide de valeurs prédéfinies, en fonction du besoin de puissance du moteur.

9. Dispositif de commande d'une unité moteur d'entraînement/transmission comprenant :
- un moteur d'entraînement et
- une commande de moteur associée à celui-ci,
- une transmission automatique réglable en continu qui permet de régler par une grandeur de réglage de transmission le couple de sortie de transmission agissant sur des roues motrices d'un véhicule et le couple de réaction sur moteur agissant en retour sur le moteur d'entraînement,
**caractérisé par**
- une commande de transmission associée, avec
- un premier module pour déterminer une puissance de consigne de sortie de transmission et un couple de consigne de sortie de transmission,
- un deuxième module relié au premier module et à la transmission réglable en continu pour déterminer une puissance dissipée de transmission et la grandeur de réglage de transmission,
- un troisième module relié au premier et au deuxième modules ainsi qu'à la commande de moteur pour déterminer un couple de moteur de consigne et un régime de moteur de consigne à partir de la puissance de moteur de consigne composée de la puissance de sortie de consigne et de la puissance dissipée, et
- un régulateur de point de fonctionnement relié au troisième module pour corriger le couple de consigne de moteur fourni par le troisième module à la commande de moteur et/ou modifier le couple de consigne de sortie de transmission fourni par le premier module au deuxième module.

10. Dispositif selon la revendication 9,
**caractérisé en ce que**
le régulateur de point de fonctionnement présente une entrée pour recevoir le régime réel de moteur.

11. Dispositif de commande d'une unité moteur d'entraînement/ transmission comprenant
- un moteur d'entraînement et
- une commande de moteur associée à celui-ci,
- une transmission automatique réglable en continu qui permet de régler, par une grandeur de réglage de transmission, le couple de sortie de transmission agissant sur des roues motrices d'un véhicule et le couple de réaction sur moteur agissant en retour sur le moteur d'entraînement,
**caractérisé par**
- une commande de transmission associée, avec
- un premier module pour déterminer une puissance de consigne de sortie de transmission,
- un deuxième module relié à la transmission réglable en continu pour déterminer une puissance dissipée de transmission et la grandeur de réglage de transmission, et
- un troisième module relié au premier et au deuxième modules pour déterminer un couple de moteur de consigne à partir de la puissance de moteur de consigne composée de la puissance de sortie de consigne et de la puissance dissipée, le troisième module transmettant au deuxième module une information concernant le rapport de transmission de consigne afin de permettre au deuxième module de déterminer la grandeur de réglage de transmission à partir du rapport de transmission réel.
